# EUROPEAN PATENT APPLICATION

(11) **EP 1 260 765 A1**
(43) Date of publication of application: **27.11.2002**
(21) Application number: 01112047.4
(22) Date of filing: 23.05.2001
(51) Int. Cl.: F23J 7/00

(54) **Combustion additive to reduce dioxin emissions**

(71) Applicant: Shiina, Keiji, Minoh-shi, Osaka (JP); Zeolite Chemical Industries Inc., Hikawa-gun, Shimane (JP)
(72) Inventor: Murakami, Masuzo, Hikawa-gun, Shimane (JP); Murakami, Tetsuo, Hikawa-gun, Shimane (JP)
(74) Representative: Patentanwälte Hauck, Graalfs, Wehnert, Döring, Siemons, Schildberg

(57) **Abstract**

The invention provides a technology to largely decrease generation of dioxin in combustion ashes as well as exhaust gas by use of an ordinary combustion apparatus.

The invention spreads over wastes being burnt an inhibitor for inhibiting generation of dioxin that comprises as main contents an adsorbing substance superior in rate of adsorbing hydrogen chloride gas and a reaction substance superior in reactivity with hydrogen chloride gas, and additionally a degradation agent when required, those mixed, granulated and dried, whereby a powder material removes hydrogen chloride gas in combustion gas and flying ashes and a granular material removes hydrogen chloride gas in residual ashes, thereby inhibiting generation of dioxin.

## Description

### BACKGROUND OF THE INVENTION

### Field of the invention

The present invention relates to a method for burning wastes almost without generating dioxin, an inhibitor inhibiting generation of dioxin, and a method of producing such inhibitor.

### Prior Art

In order to decrease dioxin generated upon burning wastes, various inhibitors inhibiting generation of dioxin, such as resolvent catalyst containing titanium oxide, and an inhibitor for removing a precursor of dioxin, or hydrogen chloride, and various technologies of burning wastes by use of those inhibitors have been hitherto developed. Furthermore developed is a gasification and dissolution technology in which exhaust gas from high temperature combustion gas of burnt wastes in a combustion chamber or zone is to be burnt again at a temperature of 1000 to 1500 °C by making use of the fact that dioxin when burnt at a very high temperature of 1000 to 1500 °C is dissolved.

The conventional dioxin removal technologies aim principally at removing or decreasing dioxin contained in the exhaust gas from that high temperature combustion gas. The foregoing conventional inhibitors inhibiting generation of dioxin and the dissolving-burning (gasification /dissolution) technique have an effect of removing or decreasing dioxin in that exhaust gas. In this respect, many attempts have been hitherto proposed as: a technique or method of dechlorination reaction by adding potassium carbonate into a low oxygen atmosphere between a boiler and a cyclone (Japanese Unexamined Patent Application No. Hei 11-9959(1999)); that an exhaust gas from combustion gas in an incinerator is cooled to 220 to 230°C and is subjected to spraying of calcium hydroxide and activated carbon, so that calcium hydroxide neutralizes acidic gas and activated carbon adsorbs dioxin and mercury (Japanese Unexamined Patent Application No. Hei 7-204432(1995)); that exhaust gas at a point during its treatment processes before becoming less than 400 °C is applied with an adsorbing/removing material for a precursor of dioxin (by making use of the fact that dioxin is unlikely to be produced at more than 400°C while easily produced around 200 to 400°C)(Japanese Unexamined Patent Application No. Hei 9-220438(1997)); that dioxin is adsorbed and removed from exhaust gas (Japanese Unexamined Patent Application No. Hei 10-128062(1998)); that an adsorbent for dioxin, such as acid clay, is blown on a flue in an incinerator (Japanese Unexamined Patent Application No. Hei 11-9963(1999)); that dioxin in exhaust gas is dissolved by use of catalyst containing titanium and others (Japanese Unexamined Patent Application Nos. Hei 2-35914(1990); Hei 3-8415(1991); Hei 4-265122(1992), and so on).

However, the conventional dioxin-generation inhibitors that utilize titanium oxide as the chief material are expensive to produce and need to be applied frequently, thereby wholly taking a great cost. And the device based on the dissolving-burning technique (gasification/ dissolution oven) is about 10 times more expensive than ordinary incinerators for wastes, and hard to be made small-sized, so that it cannot be spread broadly. The gasification/dissolution oven inevitably requires large quantities of wastes to be disposed of continuously, which has problems of collecting and transporting wastes broadly from various places and obtaining understanding, in this regard, of inhabitants near the transporting routes.

Besides, those methods do substantially not remove dioxin in ashes from burnt wastes (residual ashes). The ashes from burnt wastes are disposed of merely in such manner as mixed with a setup agent (e.g., cement) to be solidified and buried in the ground. Recently, removal of dioxin in the exhaust gas from that high temperature combustion gas can be almost achieved in case that the cost is not a problem. But huge quantities of wastes are disposed of and burnt all over the world. Limitlessly preventing at a low cost the generation of dioxin discharged in the atmosphere from the burnt wastes is quite serious and important matter. Also, it is no exaggeration to say that there are not at all any other solutions for removal of dioxin in ashes from burnt wastes than the foregoing manner of burying solidified ashes in the ground.

The inventor has studied minutely to solve those defects and succeeded in developing such a unique method of burning wastes that generation of dioxin discharged in the atmosphere is prevented at a quite low cost and dioxin in ashes from burnt wastes can be removed almost completely, and a dioxin-generation inhibitor for use in the unique wastes-burning method.

### SUMMARY OF THE INVENTION

The present invention relates to a method for burning wastes with quite less generation of dioxin, a dioxin-generation inhibitor optimum for realizing the wastes-burning method, and a method of producing such inhibitor.

The present invention also relates to a method of producing RDF which has quite less generation of hydrogen chloride gas and dioxin.

The dioxin-generation inhibitor according to the present invention comprises a granular or powder material or a mixture of the same consisting as a main content an adsorbing substance superior in rate of adsorbing hydrogen chloride gas and a reaction substance superior in reactivity with hydrogen chloride gas. The inhibitor is spread over wastes being burnt so as to remove hydrogen chloride gas in the combustion gas, flying ashes and residual ashes, thereby inhibiting generation of dioxin.

### BRIEF DESCRIPTION OF THE DRAWINGS

Fig. 1 is a side view showing a small-sized incinerator for a small plant.

Fig. 2 is a plan view showing a scattering means assembled in the small-sized incinerator in Fig. 1.

Fig. 3 is a sectional view showing a principal part of a large incinerator mounting a scattering means.

Fig. 4 is a schematic diagram showing a structure of the dioxin-generation inhibitor according to the present invention.

### DETAILED DESCRIPTION OF THE INVENTION

The present invention quickly and surely removes halogen compounds (called hereunder "hydrogen chloride gas", and being a source of generation of dioxin), such as hydrogen chloride gas and bromine chloride gas, being generated during burning wastes, in order to prevent generation of dioxin.

Dioxin comprises benzene ring, chlorine (bromine) and oxygen and is produced from chemical reaction between chloride and organic substances in wastes under presence of heavy metal and heat of 200 to 600°C. It is well known that hydrogen chloride gas reacts with calcium oxide (quick lime) or calcium hydroxide (slaked lime) to become calcium chloride. Hence, most of the conventional dioxin-generation inhibitors are made of quick lime and slaked lime and take a long reaction time and cannot sufficiently capture hydrogen chloride gas that occurs in succession.

The inventors conceived under the circumstances a combination of quick lime or slaked lime with an adsorbing substance that quickly and surely catches and captures hydrogen chloride gas generated in succession during burning wastes and achieved the present invention. For the purpose, the inventors developed various adsorbing substances excellent in rate of adsorbing hydrogen chloride gas and also shapes and methods of applying of the dioxin-generation inhibitor to be applied to wastes being burnt.

Next, the present invention will be detailed. The dioxin-generation inhibitor according to the present invention does, as foregoing, comprise as the main contents an adsorbing substance that quickly and surely catches and captures hydrogen chloride gas and a reaction substance that reacts on hydrogen chloride gas to hold chlorine. The reaction substance may employ calcium oxide (quick lime) or calcium hydroxide (slaked lime), or a mixture of the same. The dioxin-generation inhibitor according to the present invention which is shaped into granules uses slaked lime for most of the reaction substance.

Materials superior in rate of adsorbing are preferable for the adsorbing substance. Table 1 shows the adsorbing rates of various substances. Measurement operation was carried out in such manner that 0.5 g of each specimen is placed in respective polypropylene containers each having a capacity of 3000 ml and a plug, followed by applying 2 ml of 99.999% hydrogen chloride gas to each container and plugging and leaving. Concentration of hydrogen chloride gas in the containers was measured by use of Kitagawa indicator tube at a time immediately after plugging, 10 minutes after application of hydrogen chloride gas, and 20 minutes after such application (Measured by: Himec Ltd., Chugoku district office). Initial concentration of less than 0.1 in Table 1 indicates the fact that 30 ppm hydrogen chloride gas was wholly adsorbed in an instant.

**Table 1**

| | Concentration of hydrogen chloride gas (ppm) | | |
|---|---|---|---|
| Specimen | Initial | 10min after | 20min after |
| Blanks | 30 | 30 | 30 |
| Coffee grounds | 10 | 4 | under 0.1 |
| Activated coffee grounds | under 0.1 | under 0.1 | under 0.1 |
| Fly ash | 3 | 0.3 | under 0.1 |
| Activated fly ash | under 0.1 | under 0.1 | under 0.1 |
| Used tea leaves | under 0.1 | under 0.1 | under 0.1 |
| Activated carbon | 5 | 2 | under 0.1 |
| Squeezed soybeans | 17 | 8 | under 0.1 |
| Dolomite | 12 | 12 | under 0.1 |
| Synthetic zeolite 1 | 4 | 0.4 | under 0.1 |
| Synthetic zeolite 2 | under 0.1 | under 0.1 | under 0.1 |

The reason that the present invention attaches importance to the adsorbing rate with respect to the adsorbing substances is as follows. In detail, it takes about 5 to 10 seconds with more or less difference depending upon scales of incinerators that combustion gas changes to exhaust gas which is then discharged through a chimney to the atmosphere. In this course of process, the gases react on organic substances to produce dioxin. Hence, in case that it takes a minute to adsorb hydrogen chloride gas, in which time dioxin is generated, and residual hydrogen chloride gas is discharged in the atmosphere.

Next, explanation will be given upon those in Table 1 showing the initial concentration under 0.1. The activated coffee grounds are the used coffee material which already provided coffee and having about 50% water content and dried at 100 to 140 °C and comminuted under 100 mesh, more preferably, under 200 mesh, further preferably under 300 mesh since the adsorbing substances that are fine are superior in flotation. Also, since coffee grounds are more readily comminuted when having low water content, they are preferably dried to have 2% or less water content. Drying is carried out preferably at around 120 to 130°C, more preferably about 125°C since drying at 100°C or less takes long and drying at 140°C causes the coffee grounds to have oil oozed out on the surface and become poor in ability of adsorbing hydrogen chloride gas. Used coffee grounds merely dried to 5 to 10% water content was poor in adsorbing rate in comparison with activated carbon. Used tea leaves are dried and ground in the same manner as coffee grounds and are a little poor in adsorbing ability in comparison with coffee grounds, so that the used tea leaves need to be applied a little at a larger quantity. Furthermore, coffee grounds when applied with lime (about 5 to 10wt%) or having 5 to 10% water content can be advantageously ground as effectively or easily.

Fly ash is those discharged at a huge quantity from a thermal power plant or station or the like and is various in pH as 3 to 13 depending upon kinds of coal used and specific facilities of thermal power plant to thereby have or show separate adsorbing rates for adsorbing hydrogen chloride gas. Fly ash in Table 1 shows the adsorbing ability of fly ash showing pH 10 (and CEC (cation exchange capacity) about 120 at maximum) provided by mixing various fly ashes having different pH values. Thus, fly ash in Table 1 is hard to be into practical use. For the present invention, it is preferable to employ activated fly ash provided by activating freely selected fly ash. Activation of fly ash involves mixing fly ash with slaked lime, which water is added to and is agitated and left for 2 to 3 hours. The mixing ratio of fly ash and slaked lime may be at discretion but the proportion of fly ash may be preferably more than slake lime, for example, fly ash of 60 to 80wt% and slaked lime 20 to 40wt%. Precipitate in the mixture is then dried and comminuted under 100 to 200 mesh, more preferably, 300 mesh to obtain an excellent adsorbing substance that shows pH 12 to 13 and CEC 150 to 200 and is quite high in rate of adsorbing hydrogen chloride gas.

Next, synthetic zeolite will be detailed. An ordinary synthetic zeolite (synthetic zeolite 1 in Table 1) used for synthetic detergent or the like has the adsorbing rate that is only a little higher than the activated carbon and is therefore not so preferable for the present invention. Another zeolite, the synthetic zeolite 2 (provided by Tosoh Corporation under tradename "Zeolum") shows the adsorbing rate equivalent to those of the activated coffee grounds and activated fly ash. The "Zeolum" is superior in adsorbing also hydrogen sulfide gas, sulfur dioxide or other gases as well as hydrogen chloride gas, but is problematic due to a high cost.

Other materials such as the activated carbon of coconut shell, squeezed soybeans, and dolomite show the concentration under 0.1 of hydrogen chloride gas 20 minutes after the gas-application but are not usable for the present invention that needs or requires quick adsorbing. Any other adsorbing materials than those shown in Table 1 that can show or have the same or equivalent adsorbing rate as the activated coffee grounds and activated fly ash can be fully applicable to the present invention provided that it can be preferably available at a low cost. Rice hull when carbonized shows a rather high adsorbing rate but takes trouble and time for carbonization. In case that an effective carbonizing'method is available, rice hull can be usable for the present invention. Besides, wastes from agricultural products produced at a vast quantity, such as wheat hull or squeezed sugarcane, may be attempted to be given any treatment to achieve materials showing high adsorbing rate and convenience in the aspect of disposing of the wastes.

The dioxin-generation inhibitor according to the present invention adsorbs and holds immediately or quickly hydrogen chloride gas generated upon burning wastes and then causes the hydrogen chloride gas to react on slaked lime and/or quick lime and become extinct. In this respect, it is preferable to employ as calcium compound any materials having excellent efficiency of reaction on hydrogen chloride gas.

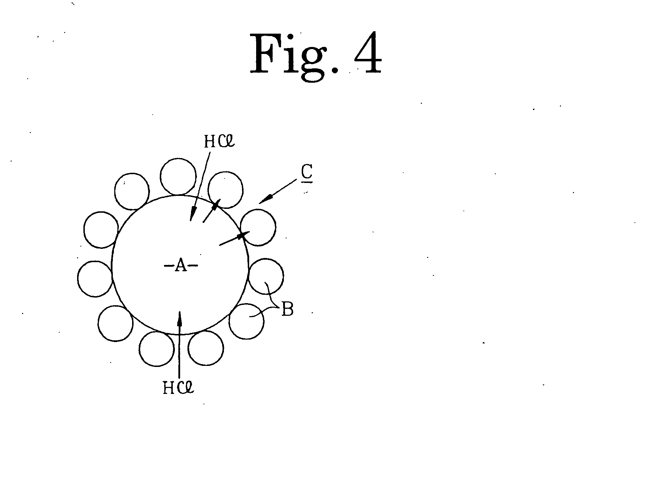

The dioxin-generation inhibitor according to the present invention is provided in such manner that 50 to 85wt% of calcium compound (slaked lime, quick lime, etc.) is mixed with 50 to 15wt% of adsorbing substance, followed by adding a proper amount of water to the mixture and making granulation and drying. More preferable mixing proportion is around 65 to 75wt% of calcium compound and around 35 to 25wt% of adsorbing substance with which mixing proportion there can be provided a dioxin-generation inhibitor C in which an adsorbing substance A is covered at most of the outer surface with calcium compounds B smaller in granular diameter than the adsorbing substance A as seen in the schematic diagram of Fig. 4. The actual or practical dioxin-generation inhibitors comprise a quite large number of the schematically shown dioxin-generation inhibitors C combined together. When the inhibitor C mixes and contacts with combustion gas or exhaust gas, the adsorbing substance A adsorbs hydrogen chloride gas contained in the gases in an instant or quickly. The adsorbed hydrogen chloride gas then reacts on calcium compound B to make calcium chloride and be removed from the system of combustion gas and exhaust gas, whereby generation of dioxin on the basis of hydrogen chloride gas as a material is largely inhibited.

The method for burning wastes according to the present invention involves spreading the foregoing dioxin-generation inhibitor over wastes being burnt in which the powder material of the invention removes hydrogen chloride gas in the combustion gas and flying ashes and the granular material removes hydrogen chloride gas generated upon burning wastes and hydrogen chloride gas contained in residual ash. The more the powder material is fine, the higher its flowability becomes, so that the powder material can have higher efficiency of contacting with combustion gas and exhaust gas and achieve excellent efficiency of adsorbing hydrogen chloride gas. Hence, the inhibitor according to the present invention adopts the mixture of the powder material and granular material whose mixing proportion may be about fifty-fifty. The power material may be simply or readily provided by that the granular material (granulated product) is subjected to a granulator to be partly made powdery, or by that granular material is caused to undergo mechanical or thermal (i.e., combustion heat about 450°C) stimulation or irritation in the incinerator to be partly made powdery. For this purpose, a degradation agent may be added for excellent efficiency of degradation. In case that the powder material is provided by causing the granular material to be partly degraded into powder in the incinerator, it is needed to apply the inhibitor only comprising the granular material which application is easily carried out. The efficiency of degradation is also required for the case that the granular material is subjected to the granulator or the case that the granular material mixed with wastes adsorbs effectively hydrogen chloride gas.

Next, the degradation agent will be explained. Granulated and dried products generally tend to tighten. Hence, the present invention provides the shape of granule that is easily degradable. A degradation agent when added a little facilitates the efficiency of degradation. The degradation agent may employ organic substances, particularly, ground product of plant, such as squeezed soybeans, used tea leaves, coffee grounds, or ground product of oyster's shell. The degradation agent may be added about 3 to 10wt%, preferably around 5wt% with respect to a total of calcium compounds and the adsorbing substance. It is preferable to use a degradation agent whose granular diameter is about under 40 to 60 mesh since too small granular diameter provides poor efficiency of degradation.

The combustion gas referred to in the present invention is a high temperature gas generated upon wastes burning in a combustion chamber or zone. Combustion exhaust gas (called herein or hereunder the "exhaust gas") is the combustion gas taken out and discharged from the combustion chamber or zone. The flying ashes is solid content or matter flying together with the combustion gas and/or exhaust gas. Also, the residual ash refers to a residue from combustion.

Disposing of wastes by use of fire involves burning wastes for disposal or making use of combustion as fuel. The present invention is applicable to either case. The present invention is also applicable to an extremely large-scale incinerator or combustion furnace of over several dozens to several hundreds tons of daily disposal, to a large or middle-sized incinerator or combustion furnace of about several dozens to several tons of daily disposal, or to a small or extremely small-sized incinerator or combustion furnace for a small scale plant or domestic use.

The present invention can be applied to the middle-sized or larger incinerator or combustion furnace merely by mounting a spreader to the conventional incinerator or combustion furnace without necessity of modification of the facilities or newly provision of expensive facilities, resulting in large reduction of cost. The reason why the spreader is used here is that wastes are continuously supplied by a movable floor or the like, so that the inhibitor according to the present invention at an amount corresponding to wastes supplied per unit time is to be applied continuously. Hence, the capacity of the spreader needs to correspond to a specific amount of wastes. Spreading the inhibitor by the spreader is precisely aimed at wastes to be burnt. The inhibitor of the present invention comprising only the powder material needs to be force-fed to a combustion point.

A small-sized incinerator or combustion furnace may be fabricated mounting a spreader on the outside and a scattering device at an upper part inside the furnace, so that hydrogen chloride gas is substantially completely removed. Furthermore, a small or extremely small-sized incinerator may burn wastes that previously mix with the inhibitor according to the present invention. Upon burning off a field or a bonfire, the inhibitor according to the present invention may be spread over wastes to largely reduce or decrease generation of dioxin.

Next, the "RDF" (refuse derived fuel, provided by shattering wastes or refuse, and causing them to set hard, i.e., drying, compressing and forming them in a bar-like shape) will be explained. In detail, RDF is a material obtained by that wastes or refuse containing thermoplastic resin, such as plastic film, is shattered and dried, and compressed and shaped into a solid matter in size of fingers. Since RDF has less water content and well-regulated shapes, they are suitable for solid fuel. RDF when burnt does generate dioxin "naturally" since RDF often contains vinyl chloride film in the material.

Under the circumstance, the inventors attempted to add the dioxin-generation inhibitor according to the present invention upon producing RDF and succeeded in manufacturing RDF that involves less generation of dioxin. Conventionally, upon manufacturing RDF, quick lime is added a little for drying (removing water content). In place of quick lime, the inventors added the dioxin-generation inhibitor of the present invention in powdery state at an amount of 0.2 to 5wt% with respect to dried wastes. The loadings when less than 0.2wt% shows less effect of removal of dioxin, and it takes much cost to have a problem in the aspect of cost and effect when the loadings is more than 5wt%. A sufficient effect of removing dioxin can be provided at the loadings around 0.5 to 1.5wt%, particularly, around 0.7 to 1wt%.

### PREFERRED EMBODIMENTS OF THE INVENTION

### (Example 1)

High reactive quicklime of 66wt% (made by Ashidachi Lime Co., Ltd., containing CaO of 73%) used as the calcium compound was mixed with activated coffee grounds (under 200 mesh) of 19wt% and activated fly ash of 9wt% used as the adsorbing substance and shown in Table 1, and used tea leaves under 40 mesh of 5wt% as the degradation agent, followed by adding water of 25wt% and kneading, extrusion shaping into granules 2mm x 5mm, and drying the shaped granules at 120°C to obtain the dioxin-generation inhibitor.

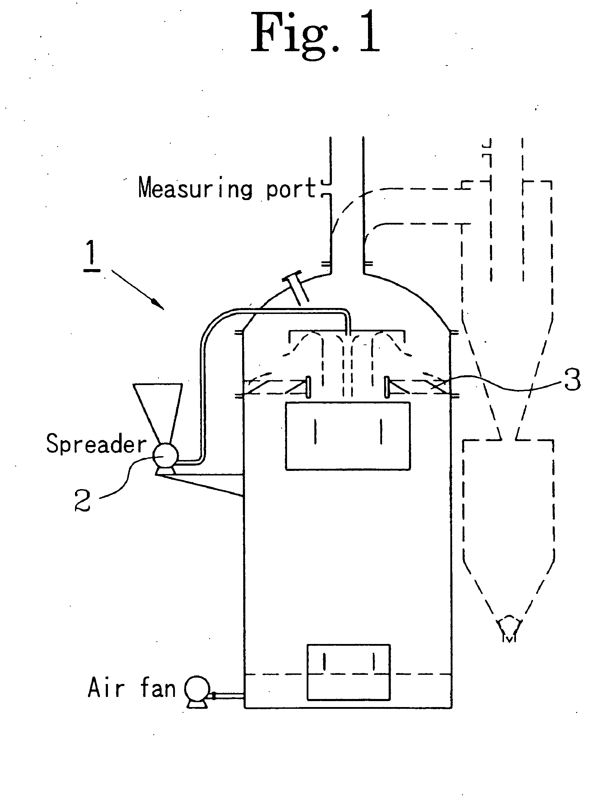

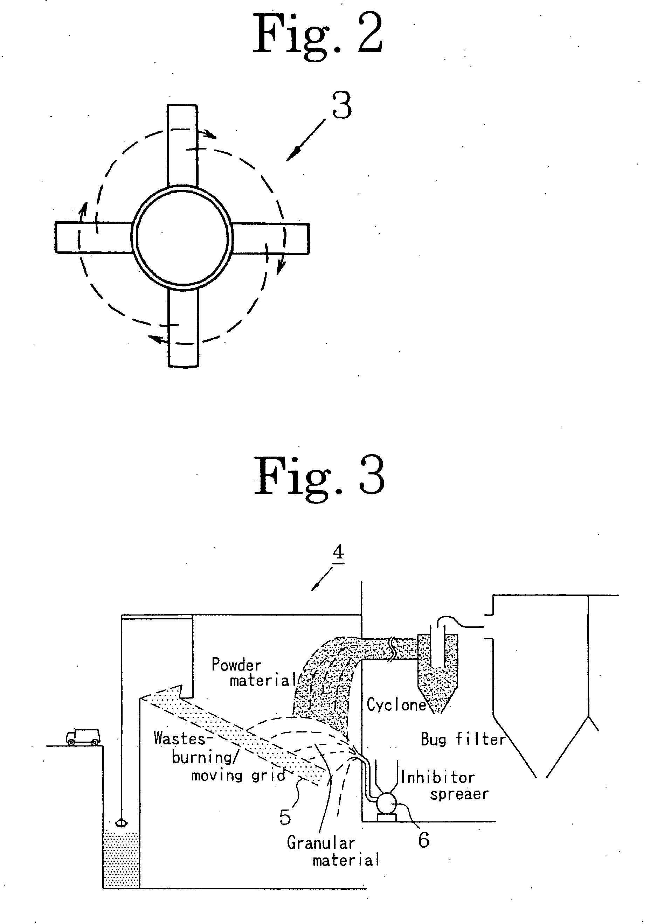

The resultant dioxin-generation inhibitor was spread to RDF (5 kg) burning in a small incinerator (or combustion furnace) 1 in Fig. 1. The amount of spreading was 0.7wt% with respect to RDF. The incinerator 1 shown in Fig. 1 is for use in a small-scale plant and comprises a spreader 2 at the outside of the furnace for feeding the dioxin-generation inhibitor into the furnace, and a scattering means 3 for scattering the inhibitor over wastes being burnt. The capacity of the incinerator 1 is 1 m³. The powder material removes hydrogen chloride gas in the combustion gas and flying ashes and the granular material removes hydrogen chloride gas in the residual ash, thereby inhibiting generation of dioxin. Fig. 2 is a plan view of the scattering means 3 whose four blades 31 each twists at the middle.

At a time when burning is stable, the combustion gas was taken through the measuring port to measure concentration of hydrogen chloride gas in the combustion gas and find that concentration was 118.2mg/m³ as shown in Table 2 (measured by Himec Ltd., Chugoku district office).

**Table 2**

| Specimen | Concentration of hydrogen chloride Gas (mg/m³) |
|---|---|
| Example 1 | 118.2 |
| Comparative example 1 | 442.0 |

### (Comparative Example 1)

RDF (5 kg) was similarly burnt in the same incinerator as Example 1 without using the dioxin-generation inhibitor of the present invention. Concentration of hydrogen chloride gas in the combustion gas was measured and shown to be 442.0 mg/m³ as seen in Table 2.

From the above, it will be appreciated that using the dioxin-generation inhibitor according to the present invention causes generation of hydrogen chloride gas to be reduced to about 1/4 in a small incinerator for general domestic use.

### (Example 2)

A large-scale combustion furnace or incinerator 4 may carry out spreading of the dioxin-generation inhibitor over wastes being burnt on the wastes-burning/moving grid 5 by use of an inhibitor spreader 6 mounted on the outside as shown in Fig. 3. In this case, the combustion furnace 4 having been being used may be enough to only mount the spreader 6 without necessity of modification, thereby being quite economical.

A manufacturing plant for RDF burns RDF partly for drying wastes material. A combustion furnace used in this case may have substantially the structure shown in Fig. 3. RDF (according to the present invention) mixing and kneading the dioxin-generation inhibitor of the invention at a proportion of 1.5wt% (with respect to dried wastes), and RDF (as conventional) mixing and kneading lime of 2wt% as conventionally were produced and burnt separately in the same large-scale combustion furnace for drying wastes to measure generated dioxin according to JIS K 0311-1999 method and gas chromatography mass analysis method. Measurement results are as shown in Table 3 (Measurer: Bab-Hitachi Industrial Co.).

**Table 3**

| Specimen | Dioxin (ng-TEQ/m³) |
|---|---|
| Example 2 | 0.063 |
| Comparative example 2 | 0.11 |
| Dioxin: PCDDs + PCDFs + CoPCB | |

As shown in Table 3, the amount of generated dioxin from RDF according to the present invention was 0.063 ng-TEQ/m³ (nanogram). The value clears 1 nanogram provided in the already given Heisei 14 (2002) Regulation for the large-scale combustion furnaces and also 0.1 nanogram newly provided in Heisei 14 regulation. Regarding small combustion furnaces for domestic use, the values provided in the regulation are 10 nanogram and 5 nanogram, respectively, and do not at all lead any problems.

### (Comparative example 2)

The conventional RDF does not clear the newly provided Heisei 14 Regulation. In this comparative example, the dioxin-generation inhibitor was partly mixed, resulting in a possibility of a low value of generated dioxin deviated from an actual state. This could be inferred from the fact that measurement results of hydrogen chloride gas on the basis of specimens taken simultaneously with measurement of dioxin do not have definite difference as seen in Table 4, i.e., that there shows merely quite little difference in comparison with the measurement results of hydrogen chloride gas shown in Example 1 and the comparative example 1, and that the case in Table 4 has merely quite little difference between the examples in view of difference of dioxin concentration in residual ash described later referring to Example 3 and comparative example 3. The above inference is possibly explained also on the basis of such fact and any difference arising therefrom that Examples 1 and 3 employ a small-sized combustion furnace while Example 2 uses a large-scale combustion furnace.

**Table 4**

| Specimen | Concentration of hydrogen chloride gas (mg/m³/N) |
|---|---|
| Example 2 | 3.9 |
| Comparative example 2 | 4.8 |
| Concentration of hydrogen chloride gas: O₂ 12% conversion | |
| JIS K 0107 Mercury thiocyanate method (II) Absorptiometric method | |

### (Example 3)

Measurement results of concentration of dioxin in residual ash taken in the burning test in Example 1 are shown in Table 5 (measured by: Bab-Hitachi Industrial Co.).

**Table 5**

| Specimen | Dioxin (ng-TEQ/m³) |
|---|---|
| Example 3 | 0.033 |
| Comparative example 3 | 0.12 |
| Dioxin: PCDDs + PCDFs + CoPCB Toxicity equivalent concentration | |

### (Comparative Example 3)

Measurement result of concentration of dioxin in residual ash taken in the burning test in the comparative example 1 is also shown in Table 5.

As seen in Table 5, concentration of dioxin contained in the residual ashes with the dioxin-generation inhibitor according to the present invention having been spread was about 1/4 in comparison with the case not spreading the inhibitor. In view of concentration of dioxin in residual ash 6.6 nanogram according to a certain measurement result, that in the comparative example in this invention is quite little. This is so inferred as resulting from using the RDF as wastes material in this Example and comparative example (to be noted here is that RDF mixes quicklime.).

### EFFECT OF THE INVENTION

As seen from the above, the inhibitor for inhibiting generation of dioxin according to the present invention comprises an adsorbing substance superior in rate of adsorbing hydrogen chloride gas and a reaction substance superior in reactivity with hydrogen chloride gas, as main contents, and a degradation agent additionally used when required, the mixture of these materials being granulated and dried.

Hence, the dioxin-generation inhibitor is superior in ability of adsorbing hydrogen chloride gas and is capable of largely reducing generation of dioxin contained in the combustion gas and residual gas, thereby making a great contribution to environmental sanitation. Also, the present invention can make use of industrial wastes as the adsorbing substance to thereby be excellent in the respect of saving resources while providing such advantage as being manufactured at a low cost and with a simple apparatus and technology.

The method for burning wastes according to the present invention involves spreading over wastes being burnt the dioxin-generation inhibitor that comprises a granular material, powder material or a mixture of the same, so that the powder material removes hydrogen chloride gas in combustion gas and flying ashes and the granular material removes hydrogen chloride gas in residual ash, whereby inhibiting generation of dioxin.

The dioxin-generation inhibitor according to the present invention can be used selectively correspondingly to the scale of incinerators and combustion furnaces to burn wastes or refuge. The dioxin-generation inhibitor is also usable in burning off dead grass or a field or in a bonfire without use of incinerators or the like.

Hence, the present invention provides that concentration of dioxin contained in the exhaust gas can be largely reduced or decreased with a simple device (although hitherto realized at a quite high cost), and concentration of dioxin in the residual ashes is also largely decreased (which has been almost impossible conventionally), providing a good news to the serious environmental problem.

## Claims

1. A method for burning wastes almost without generating dioxin comprising
spreading over wastes being burnt
a mixture of a granular material and a powder material that comprise as main contents an adsorbing substance superior in rate of adsorbing hydrogen chloride gas and a reaction substance superior in reactivity with hydrogen chloride gas, or a granular material comprising as the main contents the adsorbing substance and the reaction substance and partly easily degradable into a powder material by a mechanical or thermal stimulation,
whereby the powder material removes hydrogen chloride gas in combustion gas, exhaust gas and flying ashes and the granular material removes hydrogen chloride gas generated upon burning wastes and hydrogen chloride gas in residual ashes, thereby inhibiting generation of dioxin.

2. A method for burning wastes almost without generating dioxin comprising press feeding to a combustion point of wastes being burnt a powder material that comprises as main contents an adsorbing substance superior in rate of adsorbing hydrogen chloride gas and a reaction substance superior in reactivity with hydrogen chloride gas, whereby removing hydrogen chloride gas generated upon burning wastes and inhibiting generation of dioxin.

3. A method for burning wastes almost without generating dioxin comprising previously mixing with wastes before burning operation
a granular material and/or a powder material that comprise as main contents an adsorbing substance superior in rate of adsorbing hydrogen chloride gas and a reaction substance superior in reactivity with hydrogen chloride gas,
whereby removing hydrogen chloride gas in combustion gas, exhaust gas, flying ashes and residual ashes and inhibiting generation of dioxin.

4. A method for burning wastes almost without generating dioxin as set forth in Claim 1, 2 or 3, wherein the adsorbing substance employs synthetic zeolite, fly ash, coffee grounds, used tea leaves or other wastes of plant, or any of these being activated, and the reaction substance employs at least one compound among calcium oxide and calcium hydroxide.

5. A method for burning wastes almost without generating dioxin as set forth in Claim 1 or 3, wherein spreading over wastes being burnt at more than 450°C an inhibitor for inhibiting generation of dioxin that comprises as main matters at least one compound among calcium oxide and calcium hydroxide and powder of an adsorbing substance superior in rate of adsorbing hydrogen chloride gas, such as synthetic zeolite, fly ash, coffee grounds, used tea leaves, other wastes of plant or any of these being activated, and additionally, a degradation agent, those materials being into granules and dried,
whereby causing the inhibitor to be partly degraded into a powder material.

6. A method for burning wastes almost without generating dioxin as set forth in Claim 1, 2, 3, 4 or 5 wherein the dioxin-generation inhibitor is spread over wastes to be burnt at a proportion of 0.2 to 5wt% or preferably of 0.5 to 1.5wt% with respect to a weight of wastes when in dry state.

7. An inhibitor for inhibiting generation of dioxin comprising a mixture of a granular material and a powder material that composed of as main contents an adsorbing substance superior in rate of adsorbing hydrogen chloride gas and a reaction substance superior in reactivity with hydrogen chloride gas, or a granular material comprising as the main contents the adsorbing substance and the reaction substance and partly easily degradable into a powder material by a mechanical or thermal stimulation.

8. An inhibitor for inhibiting generation of dioxin as set forth in Claim 7 wherein the adsorbing substance employs synthetic zeolite, fly ash, coffee grounds, used tea leaves or other wastes of plant, or any of these being activated, and the reaction substance employs at least one compound among calcium oxide and calcium hydroxide.

9. An inhibitor for inhibiting generation of dioxin as set forth in Claim 7 or 8 wherein an organic matter or oyster shell powder as the degradation agent is added and the mixed materials are granulated and dried.

10. A method of producing a dioxin-generation inhibitor comprising the steps of mixing a powder of an adsorbing substance superior in rate of adsorbing hydrogen chloride gas, such as synthetic zeolite, fly ash, coffee grounds, used tea leaves, other wastes of plant or any of these being activated, and a powder of at least one compound among calcium oxide and calcium hydroxide, and adding a little amount of powder of an organic matter or oyster shell as a degradation agent when required, and then granulating and drying these mixed materials.

11. A method of producing a dioxin-generation inhibitor as set forth in Claim 10 wherein the granules material after drying is subjected to a granulator to be partly made powdery.

12. A method of producing a RDF having less generation of dioxin comprising a process of adding to crushed wastes when crushed, compressed and made solid a mixture of a powder of an adsorbing substance superior in rate of adsorbing hydrogen chloride gas, such as synthetic zeolite, fly ash, coffee grounds, used tea leaves, other wastes of plant or any of these being activated, and a powder of at least one compound among calcium oxide and calcium hydroxide.

13. A method of producing a RDF having less generation of dioxin as set forth in Claim 12 wherein the powder mixture is added at a proportion of 0.2 to 5wt%, preferably 0.5 to 1.5wt% with respect to a weight of wastes being dry.
